# EUROPEAN PATENT APPLICATION

(11) **EP 2 648 472 A1**
(43) Date of publication of application: **09.10.2013**
(21) Application number: 11845003.0
(22) Date of filing: 01.12.2011
(51) Int. Cl.: H04W 84/10

(54) **METHOD FOR ALARM INFORMATION TRANSMISSION, WIRELESS SENSOR NODE DEVICE, GATEWAY NODE DEVICE**

(30) Priority: 02.12.2010 CN 201010570420
(71) Applicant: China Mobile Group Shanghai Corporation, Shanghai 200060 (CN)
(72) Inventor: TU, Kui, Shanghai 200060 (CN); LI, Ping, Shanghai 200060 (CN)
(74) Representative: Bongiovanni, Simone
(86) International application number: PCT/CN2011/083287
(87) International publication number: WO 2012/072035

(57) **Abstract**

The presetn invention provides an alarm information transmission method, a sensor node device and a gateway node device so as to solve the problem in the prior art that alarm information generated by a sensor node cannot be transmitted in time. The method comprises: receiving, by a gateway node, indication information indicating that alarm information is desired to be sent from a sensor node that is ready to send the alarm information; determining corresponding emergency communication resource information from predetermined indication information and emergency communication resource information for transmitting the alarm infomration in accordance with the indication information; and broadcasting, by the gateway node, the determined emergency communication resource information and instructing the sensor node that receives the emergency communication resource information to transmit the alarm information in accordance with the emergency communication resource information.

## Description

### TECHNICAL FIELD

The present invention relates to the field of wireless sensor network, in particular to an alarm information transmission method, a wireless sensor node device and a gateway node device.

### BACKGROUND

Recently, with the rapid development of microelectronic technology, Micro-Electro-Mechanical Systems (MEMS) technology and wireless communication technology, the design and application of low-power sensor, with both sensing and wireless communication functions, become a reality. The resultant wireless sensor network shows a promising prospect in medical care, public security, military and environment monitoring. Information of interest can be collected as long as a corresponding sensor node is arranged at the place adjacent to an accident site.

Generally, a wireless sensor network arranged in a household environment includes the following two kinds of nodes, i.e., a Sensor Node (SN) which is equipped with various sensors for detecting and sensing the surrounding environment, and a Gateway Node (GN) capable of collecting information from the sensor nodes. The Gateway Node is normally equipped with more than two network interfaces. In one aspect, the Gateway Node communicates with an underlying wireless sensor network node via a wireless sensor network interface. In another aspect, the Gateway Node accesses to the other transport networks via Ethernet or a wireless network.

In the household environment, various sensor nodes may be used to detect various types of data so as to determine whether an emergency occurs. Usually, the data detected by the sensor node includes data reflecting environmental factors under normal conditions (e.g., temperature or humidity data) and data reflecting environmental factors under emergent conditions (e.g., gas concentration data reflecting whether a gas leakage occurs). The data detected by the sensor node is called as normal data, while the data triggered by the normal data when a triggering condition for sending an alarm in the case of emergency is met is called as alarm information. In actual application environment, although the probability of an emergency is very small, the system must ensure that the alarm information indicating the emergency can be sent to the gateway node via the sensor node in time and reliably once such emergency occurs.

According to the existing schemes, data transmission is usually completed by using communication resources allocated by the system or acquired by competition after the sensor node detects or generates the corresponding data. Here, the communication resources include frequency points, timeslots and routes used for the data transmission. Taking Zigbee (a short range wireless communication technology) network as an example, a data frame is transmitted by, as one way, acquiring the communication resources via a Carrier Sense Multiple Access with Collision Avoidance (CSMA/CA) mechanism, and as another way, requesting the communication resources from a Zigbee coordinator and then allocating the communication resources by the coordinator. In addition, Chinese patent application No.200810065566.7 ("wireless sensor network, establishment method and communication method") has disclosed a wireless sensor network for adaptively adjusting communication schedule of a network node in accordance with the data transmission requirement for service applications, an establishment method thereof and a communication method. As described in this application, the network node adaptively adjusts the working duration, and the communication duration and communication duration width of cluster nodes in the working duration in accordance with the service requirements, so as to optimize the network performance.

It is found that there exist the following main defects in the existing data transmission scheme and the scheme for adaptively adjusting the working duration for each node.

(1) With respect to the transmission of alarm information, the method for data transmission through communication resources acquired by a competition mechanism in the prior at will make it impossible to transmit the alarm information to the network node in time if no communication resource can be acquired for the data transmission by competition.

(2) The method for data transmission through communication resources allocated by the system in the prior art follows the principle of optimal efficiency and life cycle for the entire network when allocating the communication resources. In order to achieve load balance for the entire network, the alarm information may be transmitted after the transmission of the normal data. As a result, the alarm information will get stuck at a node or a routing path and cannot be transmitted to the gateway node in time.

(3) Although the scheme of adaptively adjusting the working duration for each node in accordance with the service requirements may adaptively adjust the parameters such as the working duration for each sensor node in accordance with the service requirement, it only takes the time resources that should have been used for the sleeping of the sensor node to transmit the data, and it is unable to transmit, in its essence, the alarm information preferentially and reliably.

### SUMMARY

The present invention provides an alarm information transmission method, a sensor node device, and a gateway node device so as to solve the problem in the prior art that alarm information generated by a sensor node cannot be transmitted in time.

According to an embodiment of the present invention, an alarm information transmission method comprises: reeceving, by a gateway node, indication information indicating that alarm information is desired to be sent from a sensor node that is ready to send the alarm information; determining corresponding emergency communication resource information from predetermined indication information and emergency communication resource information for transmitting the alarm infomration in accordance with the indication information; and broadcasting, by the gateway node, the determined emergency communication resource information and instructing the sensor node that receives the emergency communication resource information to transmit the alarm information in accordance with the emergency communication resource information.

According to another embodiment of the present invention, a sensor node device comprising: a sending unit configured to send indication information indicating that alarm information is desired to be sent from the sensor node device to a gateway node; a receiving unit configured to receive emergency communication resource information determined and broadcast by the gateway node in accordance with the indication information sent from the sending unit; and a transmitting unit configured to transmit the alarm information in accordance with the emergency communication resource information received by the receving unit.

According to yet another embodiment of the present invention, a gateway node device comprises: an indication infomration receiving unit configured to receive indication information indicating that alarm information is desired to be sent from a sensor node that is ready to send the alarm information; an emergency communication resource infomration determining unit configured to determine corresponding emergency communication resource information from predetermined indication information and emergency communication resource information for transmitting the alarm infomration in accordance with the indication information received by the indication infomration receiving unit; and a broadcasting unit configured to broadcast the emergency communication resource information determimed by the emergency communication resource information determining unit.

The present invention has the following beneficial effect.

Through the above-mentioned solutions of the present invention, the sensor node notifies the gateway node that there is alarm information to be transmitted, and then the gateway node schedules the communication resource of the entire wireless sensor network, so that the sensor node can transmit the alarm information in time without any resource competition.

### BRIEF DESCRIPTION OF THE DRAWINGS

Fig.1 is a flow chart of an alarm information transmission method according to embodiments of the present invention;

Fig.2 is a schematic view showing a practical application environment of the scheme according to embodiments of the present invention;

Fig.3 is a flow chart of a working principle of the scheme according to embodiments of the present invention;

Fig.4 is a structural schematic view showing a sensor node device according to embodiments of the present invention; and

Fig.5 is a structural schematic view showing a gateway node device according to embodiments of the present invention.

### DETAILED DESCRIPTION

In order to overcome the drawbacks in the prior art, the present invention provides a scheme where, after a sensor node arranged in a household environment generates alarm information in accordance with the detected data, the sensor node notifies a gateway node that the alarm information is desired to be transmitted, and then the gateway node schedules communication resources of the entire wireless sensor network so as to ensure that the alarm information can be transmitted in time.

The present invention is described hereinafter in details in conjunction with the drawings.

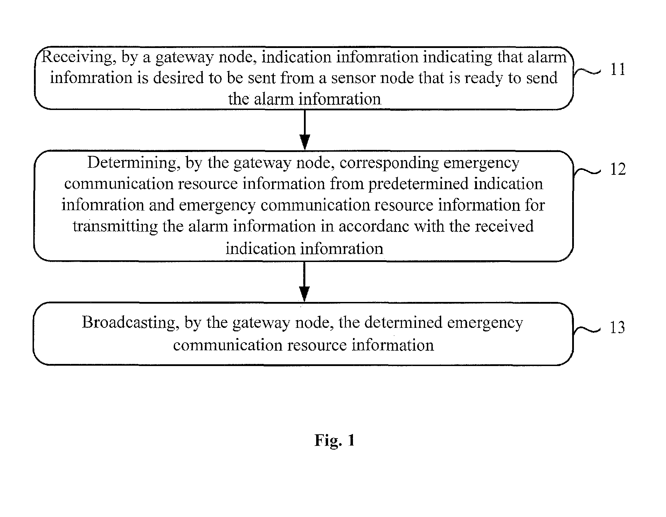

As shown in Fig.1, the present invention provides an alarm information transmission method, comprising the following steps.

Step 11: receiving, by a gateway node, indication infomration indicating that alarm infomration is desired to be sent from a sensor node that is ready to send the alarm infomration. Here, the indication infomration may be any infomration which is pre-agreed by the gateway node and the sensor node and which may indicate that the alarm infomration is desired to be sent, such as, identification information of the sensor node (e.g., source address information) and pre-agreed data level information corresponding to the alrm information.

Step 12: determining, by the gateway node, corresponding emergency communication resource information from predetermined indication infomration and emergency communication resource information for transmitting the alarm information in accordanc with the received indication infomration. Here, the emergency communication resource infomration may be, but not limited to, one or more of frequency point information, timeslot information and routing path infomration.

Step 13: broadcasting, by the gateway node, the determined emergency communication resource information, and instructing the sensor node that has received the emergency communication resource information to transmit the alarm informatinon in accordance with the emergency communication resource information.

Through the above-mentioned method, the sensor node, before sending the alarm infomration, sends the indication information to the gateway node, and then the gateway node allocates dedicated emergency communication resources for the alarm information in accordance with the indication information, so that the sensor node that is ready to send the alarm information can acquire the communication resources for sending the alarm information without any competition, thereby can send the alarm information through the dedicated emergency communication resources. As a result, the alarm information can be transmitted in time.

In this embodiment, the emergency communication resource infomration may further include infomration about several routing paths, one of which may be regarded as a "main path" for transmitting the alarm information, and the others of which may be regarded as "backup paths". The gateway node may broadcast the infomration about one routing path selected from the information about several routing paths, or the information about all routing paths. After receiving the infomration about several routing paths, the sensor node may trasnmit the alarm infomration over the serval routing paths respectively. The advantage of transmitting the alarm infomration over several routing paths respectively is that it is able to further ensrure timely and reliable transmission of the alarm information. Even if one or more of the several routing paths is failed, the alarm infomration can still be transmitted over the other routing paths without any failures.

The scheme of the present invention in actual application is taken hereinafter as an example so as to describe in details the workflow thereof.

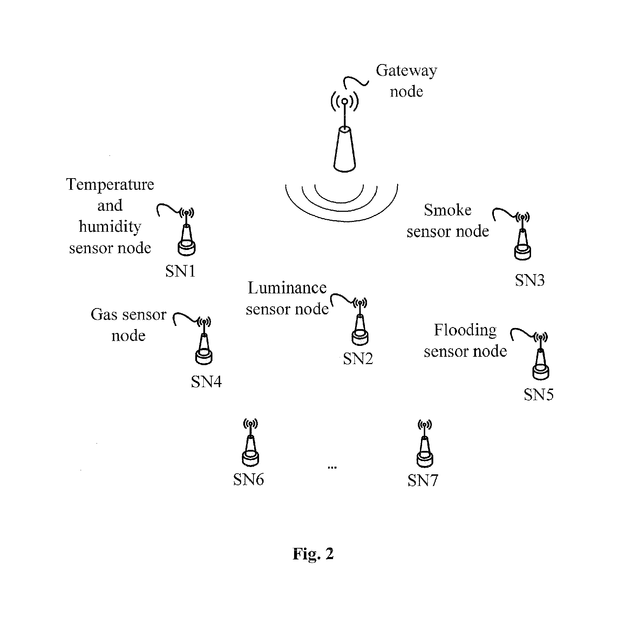

The above scheme may be applied to a system similar as a wireless sensor network system in the prior art. The system may include a plurality of sensor nodes and one or more gateway nodes. As shown in Fig.2, the sensor node may include, in accordance with different types of sensors equipped therewith, temperature and humidity sensor node, gas leakage sensor node, luminance sensor node, smoke sensor node, flooding sensor node and the like, which are all used for detecting and sensing the information in a household environment. The data detected by these sensor nodes is usually transmitted to the gateway node in a single-hop or multi-hop manner, and the alarm information triggered by the detected data is also transmitted to the gateway node in a single-hop or multi-hop manner. The gateway node stores and manages the date transmitted from the sensor nodes, and schedules the communication resources of a network composed of the sensor nodes within the communication range.

In order to realize the method provided by the present invention, the data transmitted from the sensor node may be divided into alarm information and normal data in accordance with the degree of emergency. Similar to the above, the data detected by the sensor node is usually called as normal data, while the data triggered by the normal data when a triggering condition for sending an alarm in the case of emergency is met is called as alarm information.

Meanwhile, the frames transmitted from the sensor node to the gateway node may include signaling frames and data frames. The data frame includes the data (including the alarm information and/or normal data) detected by the sensor node and desired to be sent to the gateway node, and the signaling frame includes source address information of the sensor node that sends the signaling frame, data emergency level information, as well as communication resource information desired for transmitting the data frame by the sensor node. Here, the communication resource information may be good communication resource information obtained by the sensor node in accordance with the received signal strength, e.g., frequency point information and bandwidth information.

Prior to sending the data frame to the gateway node, the sensor node sends the signaling frame describing attributes of the data frame thereto. The signaling frame can be transmitted with a small amount of transmission resources to the gateway node conveniently and thereby can prepare for the transmission of the data frame.

In order to schedule the communication resources for the data frame transmission at the sensor node, the gateway node of the present invention further includes an emergency communication resource scheduling module (hereinafter referred to as scheduling module) for storing and maintaining a scheduling information table as shown in Table 1, where data frame source address information, emergency communication resource configuration information and emergency communication route information are included.

**Table 1**

| Data frame source address information | Emergency communication resource configuration information | Emergency communication route information |
|---|---|---|
| SN3 | frequency point: f0 | emergency route: SN3→GN |
| | timeslot: t0 | backup route 1: SN3→SN2→GN |
| | transmission power: P0 | backup route 2: SN3→SN1→GN |
| SN4 | frequency point: f1 | emergency route: SN4→GN |
| | timeslot: t1 | backup route 1: SN4→SN1→GN |
| | transmission power: P1 | backup route 2: SN4→SN2→GN |
| ... | ... | ... |

In Table 1, the data frame source address information is used to indicate the sensor node that is ready to send the alarm information, the emergency communication resource configuration information is used to indicate the communication resource desired for sending the alarm information by the sensor node, and the emergency communication route information is used to indicate an emergency route and backup routes through which the alarm information sent by the sensor node travels.

To be specific, taking the second row of Table 1 as an example, "SN4" in the first column is an identifier of the sensor node that is ready to send the alarm information, the emergency communication resource configuration information in the second column is used to indicate the information, such as frequency point f1, timeslot t1 and transmission power P1, for sending the alarm information generated by the sensor node with the identifier "SN4", and the emergency communication route information in the third column is used to indicate one emergency route and two backup routes for sending the alarm information generated by the sensor node with the identifier "SN4".

A principle for maintaining, by the scheduling module, the emergency communication resource configuration information in Table 1 is that, a fixed frequency point and a fixed timeslot is allocated for a sensor node as far as possible, so as to avoid communication resource competition during the emergency communication and to transmit the emergency data with a high power by the sensor node.

The scheduling module may, in accordance with the actual situation, select one route with the highest data transmission accuracy as the emergency route for the sensor node that is ready to send the alarm information (the route with the highest data transmission accuracy may be a route with the fewest hops when the path is accessible, a route with the best link signal, or the other route with the highest data transmission accuracy). Also, the scheduling module may select a plurality of accessible routes as the backup routes.

In this embodiment, the scheduling module may periodically update the emergency communication resource configuration information and the emergency communication route information in Table 1 in accordance with network topology information and a channel environment of the sensor node that is ready to send the alarm information. By periodically updating and maintaining the information in Table 1, it is able to ensure the timely and reliable transmission of the alarm information as possible after the alarm information is generated by any sensor node.

In order to corporate with the scheduling module, the gateway node may further include an emergency judging module, which is mainly configured to judge how to select the emergency communication resource configuration information and the emergency communication route information maintained by the scheduling module in Table 1 in accordance with the signaling frame sent by the sensor node.

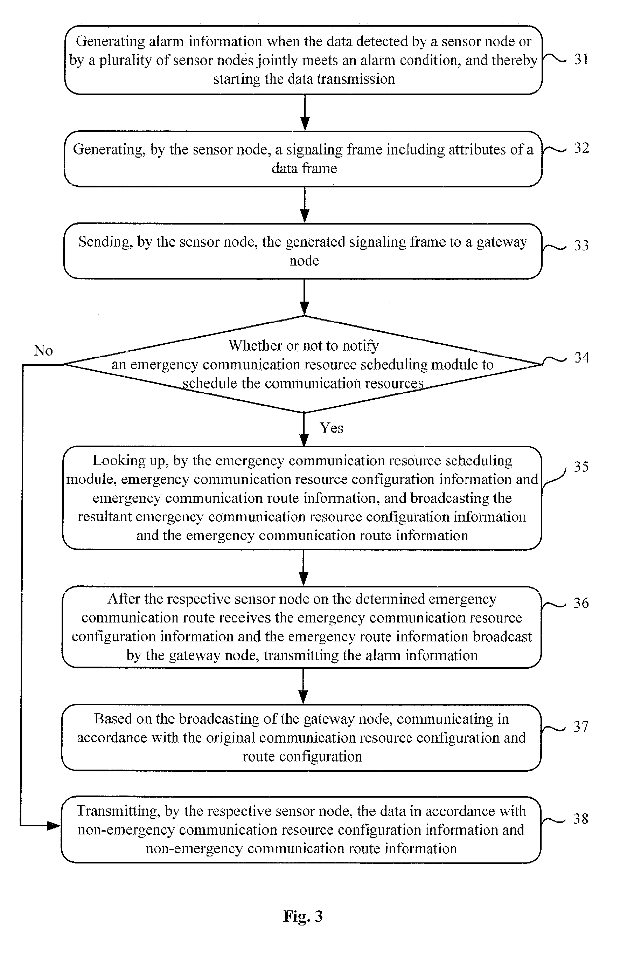

The working principle of the method of the present invention is described hereinafter in conjunction with the above two types of frames, the emergency communication resource scheduling module, the emergency judging module and the environment as shown in Fig.2. Referring to Fig.3, the method comprises the following steps.

Step 31: detecting and sensing, by a respective sensor node in a wireless sensor network, data in a surrounding environment in real time, generating alarm information when the data detected by the sensor node or by a plurality of sensor nodes jointly meets an alarm condition, and thereby starting the data transmission.

Step 32: generating, by the sensor node, a signaling frame including attributes of the data frame. The signaling frame may include the data frame source address information (i.e., an identifier of the sensor node that is ready to send the alarm information), and it may further include, in accordance with the practical situation, the data emergency level (when the gateway node can determine the data emergency level in accordance with the data frame source address information based on a predetermined agreement, it is unnecessary to send the data emergency level information), or the communication resources desired for transmitting the data frame (including the data volume of the data frame).

Step 33: sending, by the sensor node, the generated signaling frame to the gateway node.

Step 34: after the gateway node receives one or more signaling frames, judging, by the emergency judging module, whether or not to notify the emergency communication resource scheduling module in accordance with the data emergency level in the signaling frames, and determining the sensor node that is desired to transmit the alarm information in accordance with the source address information in the signaling frames. It is to be noted that, if no data level information is included in the signaling fame, the emergency judging module will judge whether or not to notify the emergency communication resource scheduling module to schedule the communication resources in accordance with a pre-agreed correspondence between the source address information and a strategy for sending the data frame. If the judgment result is YES, it proceeds to Step 35 and otherwise it proceeds to Step 38.

Step 35: looking up, by the emergency communication resource scheduling module of the gateway node, the emergency communication resource configuration information and the emergency communication route information corresponding to the data frame source address information in Table 1 in accordance with the data frame source address in the signaling frame, and broadcasting the emergency communication resource configuration information and the emergency communication route information.

Step 36: after the respective sensor node on the determined emergency communication route receives the emergency communication resource configuration information and the emergency communication route information broadcast by the network gateway, monitoring the data frame carrying the alarm information on a timeslot indicated by the emergency communication resource configuration information, and after the data is monitored, sending the data frame using the frequency point indicated by the emergency communication resource configuration information so as to transmit the alarm information in time and reliably. In Step 36, the data frame may be sent over the emergency route or the backup routes. The advantage of transmitting the data frame over a plurality of routs simultaneously is that it is able to further ensure the transmission success rate of the data frame. Even if the data frame transmission over the emergency route is failed, the backup routes may also be used to transmit the data frame so as to achieve a maximum probability of reliable transmission.

Step 37: after the respective sensor node transmits the alarm information in accordance with the communication resource configuration information and the emergency route information broadcast by the gateway node, broadcasting, by the gateway node, to the respective sensor and notifying the sensor node to communicate in accordance with the original communication resource configuration and route configuration.

Step 38: transmitting, by the respective sensor node, the data in accordance with non-emergency communication resource configuration information and non-emergency communication route information.

According to the above workflow, prior to sending the data frame carrying the alarm information, the sensor node sends the signaling frame indicating that the sensor node is ready to send the alarm information to the gateway node, and then the gateway node schedules the communication resources of the wireless sensor network in accordance with the signaling frame, so as to ensure timely transmission of the alarm information.

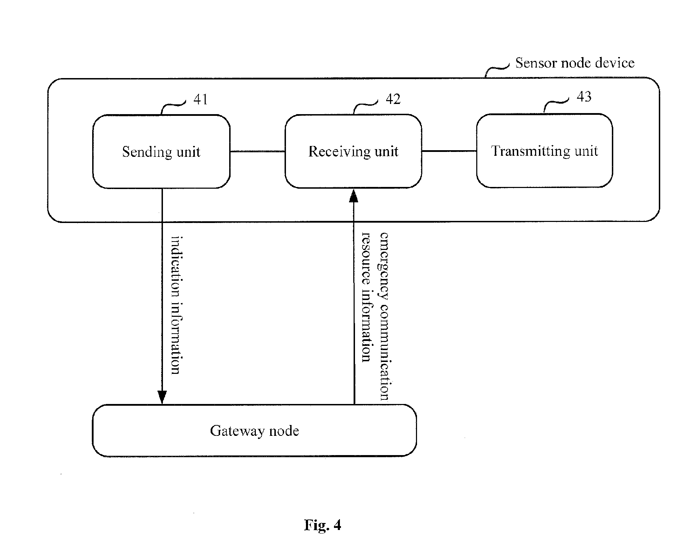

Corresponding to the above alarm information transmission method, the present invention further provides a sensor node device so as to solve the problem in the prior art that alarm information generated by a sensor node cannot be transmitted in time. As shown in Fig.4, the sensor node device comprises:
a sending unit 41, configured to send indication infomration indicating that a sensor node is ready to send alarm information to a gateway node;
a receiving unit 42, configured to receive emergency commuincation resource information determined and broadcast by the gateway node in accordance with the indication information sent by the sending unit 41; and
a transmitting unit 43, configured to transmit the alarm information in accordance with the emergency communication resource information received by the receiving unit 42.

In a preferred embodiment, the emergency communication resource information may include infomration about at least two different routing paths, and the transmitting unit 43 may be specifically configured to transmit the alarm information over the at least two different routing paths respectively.

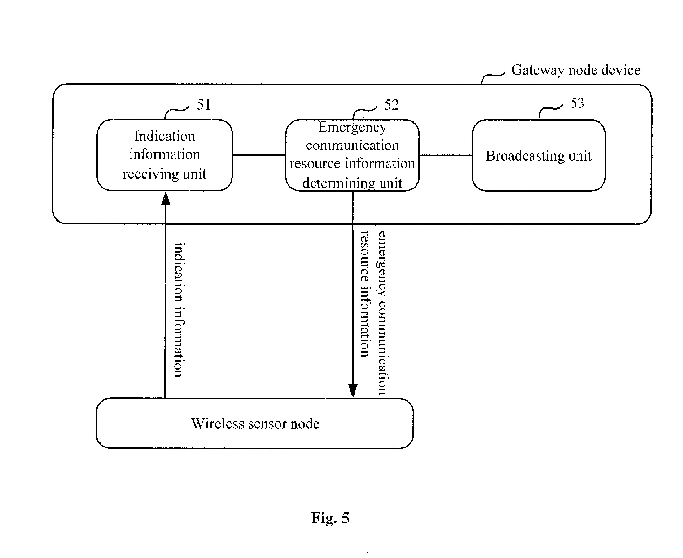

The present invention further provides a gateway node device as shown in Fig.5, the gateway node device comprises:
an indication infomration receiving unit 51, configured to receive indication infomration indicating that alarm information is desired to be sent from a sensor node that is ready to send the alarm information;
an emergency communication resource information determining unit 52, configured to determine corresponding emergency communication resource information from predetermined indication information and the emergency communication resource information for transmitting the alarm information in accordance with the indication information received by the indication information receiving unit 51; and
a broadcasting unit 53, configured to broadcast the emergency communication resource information determined by the emergency communication resource information determining unit 52.

In order to transmit the alarm information in time and reliably, in a preferred embodiment, the emergency communication resource information may further include information about at least two different routing paths.

It should be appreciated that, the present invention may be provided as a method, a system or a computer program product, so the present invention may be in the form of full hardware embodiments, full software embodiments, or combinations thereof. In addition, the present invention may be in the form of a computer program product implemented on one or more computer-readable storage mediums (including but not limited to disk memory, CD-ROM and optical memory) including computer-readable program codes.

The present invention is described with reference to the flow charts and/or block diagrams showing the method, device (system) and computer program product according to the embodiments of the present invention. It should be appreciated that each process and/or block, or combinations thereof, in the flow charts and/or block diagrams may be implemented via computer program commands. These computer program commands may be applied to a general-purpose computer, a special-purpose computer, an embedded processor or any other processor of programmable data processing equipment, so as to form a machine, thereby to obtain the means capable of effecting the functions specified in one or more processes in the flow charts and/or one or more blocks in the block diagrams in accordance with the commands executed by the computer or the processor of the other programmable data processing equipment.

These computer program commands may also be stored in a computer-readable memory capable of guiding the computer or the other programmable data processing equipment to work in a special manner, so as to form a product including a command device capable of effecting the functions specified in one or more processes in the flow charts and/or one or more blocks in the block diagrams.

These computer program commands may also be loaded onto a computer or the other programmable data processing equipment, so as to perform a series of operations thereon and generate the processings implemented by the computer, thereby to provide the steps capable of effecting the functions specified one or more processes in the flow charts and/or one or more blocks in the block diagrams in accordance with the instructions.

Although the preferred embodiments are described above, a person skilled in the art may make modifications and alterations to these embodiments in accordance with the basic concept of the present invention. So, the attached claims are intended to include the preferred embodiments and all of the modifications and alterations that fall within the scope of the present invention.

Obviously, a person skilled in the art may make alterations and modifications without departing from the spirit and scope of present invention. If these alterations and modifications fall within the scope defined by the appended claims and the equivalent technology, the present invention is also intended to include these alterations and modifications.

## Claims

1. An alarm information transmission method, comprising:
receiving, by a gateway node, indication information indicating that alarm information is desired to be sent from a sensor node that is ready to send the alarm information;
determining corresponding emergency communication resource information from predetermined indication information and emergency communication resource information for transmitting the alarm infomration in accordance with the indication information; and
broadcasting, by the gateway node, the determined emergency communication resource information and instructing the sensor node that receives the emergency communication resource information to transmit the alarm information in accordance with the emergency communication resource information.

2. The method according to claim 1, wherein the emergency communication resource information includes infomration about at least two different routing paths.

3. The method according to claim 2, wherein the step of instructing the sensor node to transmit the alarm information in accordance with the emergency communication resource information comprises:
instructing the sensor node to transmit the alarm information over the at least two different routing paths respectively.

4. The method according to claim 1, wherein the emergency communication resource information includes frequency point information, timeslot information and routing path information.

5. The method according to any one of claims 1 to 4, wherein the indication information comprises:
source address information of the sensor node that is ready to send the alarm information, or
pre-agreed data level information corresponding to the alarm information.

6. A sensor node device, comprising:
a sending unit, configured to send indication information indicating that alarm information is desired to be sent from the sensor node device to a gateway node;
a receiving unit, configured to receive emergency communication resource information determined and broadcast by the gateway node in accordance with the indication information sent from the sending unit; and
a transmitting unit, configured to transmit the alarm information in accordance with the emergency communication resource information received by the receving unit.

7. The sensor node device according to claim 6, wherein the the emergency communication resource information includes infomration about at least two different routing paths.

8. The sensor node device according to claim 7, wherein the transmitting unit is specifically configured to transmit the alarm information over the at least two different routing paths respectively.

9. A gateway node device, comprising:
an indication infomration receiving unit, configured to receive indication information indicating that alarm information is desired to be sent from a sensor node that is ready to send the alarm information;
an emergency communication resource infomration determining unit, configured to determine corresponding emergency communication resource information from predetermined indication information and emergency communication resource information for transmitting the alarm infomration in accordance with the indication information received by the indication infomration receiving unit; and
a broadcasting unit, configured to broadcast the emergency communication resource information determimed by the emergency communication resource information determining unit.

10. The gateway node device according to claim 9, wherein the the emergency communication resource information includes infomration about at least two different routing paths.
